# EUROPÄISCHE PATENTSCHRIFT

(11) **EP 3 985 155 B1**
(45) Veröffentlichungstag und Bekanntmachung des Hinweises auf die Patenterteilung: **10.06.2026**
(21) Anmeldenummer: 21198185.7
(22) Anmeldetag: 22.09.2021
(51) Int. Cl.: D06F 34/05, D06F 34/28, D06F 33/32, D06F 34/18, D06F 101/02

(54) **SYSTEM ZUM STEUERN EINES HAUSHALTSGERÄTS**
SYSTEM FOR CONTROLLING A DOMESTIC DEVICE
SYSTÈME DE COMMANDE D'UN APPAREIL ÉLECTROMÉNAGER

(30) Priorität: 16.10.2020 DE 102020213072
(43) Veröffentlichungstag der Anmeldung: 20.04.2022
(73) Patentinhaber: BSH Hausgeräte GmbH, 81739 München (DE)
(72) Erfinder: Almendros Carmona, Ismael Jesus, 10709 Berlin (DE); Czyzewski, Gundula, 13125 Berlin (DE); Flohe, Daniel, 13353 Berlin (DE); Gramm, Georg, 14612 Falkensee (DE); John, Franziska, 16761 Hennigsdorf (DE); Kuehne, Holger, 17039 Wulkenzin OT Neuendorf (DE); Wuttge, Oliver, 12157 Berlin (DE)

(56) Entgegenhaltungen:
- EP-A1- 3 460 594
- DE-A1- 102011 077 572
- DE-A1- 102012 200 714
- DE-A1- 102016 225 812
- DE-A1- 102017 223 224

## Beschreibung

Die vorliegende Erfindung betrifft ein System zum Steuern eines Haushaltsgeräts.

In herkömmlichen Haushaltsgeräten, insbesondere Wäschepflegegeräten, wird aufgrund der oftmals großen Anzahl an Programmoptionen ein leistungsfähiger Prozessor und/oder ein umfangreicher Gerätespeicher vorgesehen, wodurch sich die Herstellungskosten entsprechender Haushaltsgeräte, insbesondere Wäschepflegegeräte, erhöhen. Doch selbst bei entsprechend umfassender Rechen-, bzw. Speicherleistung können die Programmoptionen in herkömmlichen Haushaltsgeräten, insbesondere Wäschepflegegeräten, üblicherweise nur eine begrenzte Auswahl von allen möglichen Programmvarianten wiedergeben, so dass der Nutzer bei der Programmauswahl oftmals einen für den Nutzer nicht immer vorteilhaften Kompromiss eingehen muss.

In der DE 10 2016 223 950 A1 wird ein Haushaltsgerät mit einer Netzwerkschnittstelle offenbart.

Die Offenlegungsschrift DE 10 2012 200 714 A1 offenbart ein Verfahren zur Datenkommunikation zwischen einem Haushaltsgerät und einem Benutzerendgerät.

Die Offenlegungsschrift DE 10 2016 225 812 A1 offenbart eine Vorrichtung zur Dosierung von Reinigungsmitteln.

Die Offenlegungsschrift DE 10 2011 077 572 A1 offenbart ein Verfahren zum Betreiben eines programmgesteuerten Haushaltsgeräts.

Die Offenlegungsschrift EP 3 460 594 A1 offenbart ein System zum Steuern eines Betriebs eines Haushaltsgeräts.

Es ist die Aufgabe der vorliegenden Erfindung, ein System mit einem Haushaltsgerät anzugeben, welches dezentral die Generierung eines auf den Nutzer individuell angepassten Steuerungsprogramms für das Haushaltsgerät ermöglicht.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Gemäß einem ersten Aspekt wird die erfindungsgemäße Aufgabe durch ein System zum Steuern eines Haushaltsgeräts gelöst, wobei das System das Haushaltsgerät mit einer Gerätesteuerung, ein Steuerungsmodul mit einer Modulsteuerung und eine durch einen Nutzer des Systems bedienbare Eingabevorrichtung umfasst, wobei das Steuerungsmodul durch eine erste Netzwerkverbindung mit der Eingabevorrichtung steuerungstechnisch verbunden ist, und wobei das Steuerungsmodul mit dem Haushaltsgerät durch eine zweite Netzwerkverbindung steuerungstechnisch verbunden ist, wobei die Eingabevorrichtung ausgebildet ist, basierend auf der Eingabe des Nutzers des Systems zumindest einen Eingabeparameter durch die erste Netzwerkverbindung an das Steuerungsmodul zu übertragen, wobei die Modulsteuerung des Steuerungsmoduls ausgebildet ist, ein Steuerungsprogramm für das Haushaltsgerät basierend auf dem übertragenen zumindest einen Eingabeparameter zu generieren, wobei das Steuerungsmodul ausgebildet ist, das generierte Steuerungsprogramm für das Haushaltsgerät durch die zweite Netzwerkverbindung an das Haushaltsgerät zu übertragen, und wobei die Gerätesteuerung des Haushaltsgeräts ausgebildet ist, das generierte Steuerungsprogramm für das Haushaltsgerät zu aktivieren, um das generierte Steuerungsprogramm auf dem Haushaltsgerät basierend auf der Eingabe des Nutzers des Systems auszuführen.

Dadurch wird der technische Vorteil erreicht, dass zum einen durch die dezentrale Generierung des Steuerungsprogramms auf dem Steuerungsmodul, entsprechende Rechenleistung und Speicherkapazitäten zur Generierung des Steuerungsprogramms nicht auf dem Haushaltsgerät selbst vorgehalten werden müssen, sondern hierfür das Steuerungsmodul speziell dafür ausgelegt werden kann. Dies reduziert die Herstellungskosten und den Energieverbrauch des Haushaltsgeräts.

Das Steuerungsmodul umfasst insbesondere ein von dem Haushaltsgerät und der Eingabevorrichtung räumlich getrenntes Modul, wie z.B. einen zentralen Server oder eine Computer-Cloud.

Das Steuerungsmodul kann ferner durch eine Mehrzahl von ersten Netzwerkverbindungen mit einer Mehrzahl von Eingabevorrichtungen steuerungstechnisch verbunden sein, und das Steuerungsmodul kann ferner durch eine Mehrzahl von zweiten Netzwerkverbindungen mit einer Mehrzahl von Haushaltsgeräten steuerungstechnisch verbunden sein, so dass das Steuerungsmodul eine entsprechende auf den übertragenen Eingabeparametern basierende Generierung von Steuerungsprogrammen für eine Mehrzahl von unterschiedlichen Haushaltsgeräten durchführen kann, insbesondere für unterschiedliche Gerätetypen von Haushaltsgeräten und für unterschiedliche Eingabeparameter der jeweiligen Nutzer. In diesem Fall kann durch das Steuerungsmodul eine besonders effektive zentrale Steuerungsprogrammgenerierung für eine große Anzahl von Haushaltsgeräten sichergestellt werden.

Ein weiterer Vorteil der entsprechenden Generierung von Steuerungsprogrammen durch die Modulsteuerung des Steuerungsmoduls umfasst das Erschaffen eines auf den entsprechenden Gerätetyp und auf die durch den Nutzer mittels des Eingabeparameters gewählte Programmsituation individuell angepassten Steuerungsprogramms, so dass durch die Modulsteuerung insbesondere eine unendliche Anzahl von möglichen Steuerungsprogrammen generiert werden kann.

Im Gegensatz zu einer herkömmlich bekannten bloßen Auswahl von auf einer Zentralsteuerung hinterlegten Steuerungsprogrammen, generiert die Modulsteuerung des Steuerungsmoduls gemäß der vorliegenden Offenbarung das entsprechende Steuerungsprogramm selbst, d.h. die Modulsteuerung erschafft, bzw. programmiert ein neues Steuerungsprogramm, was auf den spezifischen Steuerungsfall des spezifischen Haushaltsgeräts abgestimmt ist.

Dies gelingt beispielsweise dadurch, dass in der Modulsteuerung Informationen zu den einzelnen Geräten des jeweiligen Haushaltsgeräts hinterlegt sind, insbesondere zusammen mit möglichen ansteuerbaren Bereichen von einzelnen Steuerungsparametern der jeweiligen Geräte. Insofern muss die Modulsteuerung des Steuerungsmoduls in Abhängigkeit von der Eingabeparametern des Nutzers, bzw. den Gerätespezifikationen des jeweiligen Haushaltsgeräts lediglich die für die entsprechenden Geräte des jeweiligen Haushaltsgeräte relevanten Programmblöcke auswählen, die für die entsprechenden Programmblöcke relevanten Steuerungsparameter des jeweiligen Geräts des Haushaltsgeräts anpassen, bzw. festlegen und die entsprechenden angepassten Programmblöcke zu einem fertigen Steuerungsprogramm zusammenfassen und dieses dann an das Haushaltsgerät übermitteln.

Insbesondere weist die Modulsteuerung des Steuerungsmoduls hierzu einen selbstlernenden Algorithmus auf, insbesondere einen auf künstlicher Intelligenz basierenden selbstlernenden Algorithmus auf, um das Steuerungsprogramm zu generieren.

Ist das Haushaltsgerät beispielsweise ein Wäschepflegegerät und umfassen die von dem Nutzer mittels der Eingabevorrichtung übermitteln Eingabeparameter, beispielsweise die Auswahl von Wäscheparamatern, umfassend z.B. die Auswahl von empfindlicher Wäsche, dann kann die Modulsteuerung des Steuerungsmoduls bei der Generierung des Steuerungsprogramms z.B. die Temperatur während des Wäschepflegevorgangs auf 30 °C begrenzen, bzw. einen abschließenden Schleudergang nicht in das Steuerungsprogramm integrieren, bzw. die Drehzahl eines entsprechenden Schleudergangs auf eine minimale Drehzahl reduzieren, so dass bei der Ausführung des generierten Steuerungsprogramms auf dem Haushaltsgerät die Wahrscheinlichkeit einer Beschädigung der empfindlichen Wäsche reduziert werden kann.

Somit ermöglich die Modulsteuerung der Steuerungsmoduls eine dezentrale und damit effektive, insbesondere auf eine große Zahl von unterschiedlichen Haushaltsgeräten anwendbare, Generierung von Steuerungsprogrammen. Durch die von dem Nutzer mittels der Eingabevorrichtung übermittelten Eingabeparamater kann die Modulsteuerung des Steuerungsmoduls ein auf die individuelle Nutzersituation abgestimmtes Steuerungsprogramm neu generieren, wodurch eine optimierte Steuerung des Haushaltsgeräts sichergestellt werden kann.

Unter einem Haushaltsgerät wird ein Gerät verstanden, das zur Haushaltsführung eingesetzt wird. Das kann ein Haushaltsgroßgerät sein, wie beispielsweise eine Waschmaschine, ein Wäschetrockner, eine Geschirrspülmaschine. Das kann aber auch ein Haushaltskleingerät sein, wie beispielsweise ein Warmwasserbereiter, ein Kaffeevollautomat, eine Küchenmaschine oder ein Teppichreinigungsgerät.

Insbesondere umfasst das Haushaltsgerät ein Wäschepflegegerät, wie z.B. eine Waschmaschine oder einen Wäschetrockner.

In einer vorteilhaften Ausführungsform ist das Haushaltsgerät ein Wäschepflegegerät zum Pflegen von Wäsche, wobei das System das Wäschepflegegerät mit einer Gerätesteuerung, das Steuerungsmodul mit der Modulsteuerung und die durch einen Nutzer des Systems bedienbare Eingabevorrichtung umfasst, wobei das Steuerungsmodul durch die erste Netzwerkverbindung mit der Eingabevorrichtung steuerungstechnisch verbunden ist, und wobei das Steuerungsmodul mit dem Wäschepflegegerät durch die zweite Netzwerkverbindung steuerungstechnisch verbunden ist, wobei die Eingabevorrichtung ausgebildet ist, basierend auf der Eingabe des Nutzers des Systems zumindest einen Eingabeparameter durch die erste Netzwerkverbindung an das Steuerungsmodul zu übertragen, wobei die Modulsteuerung des Steuerungsmoduls ausgebildet ist, ein Steuerungsprogramm für das Wäschepflegegerät basierend auf dem übertragenen zumindest einen Eingabeparameter zu generieren, wobei das Steuerungsmodul ausgebildet ist, das generierte Steuerungsprogramm für das Wäschepflegegerät durch die zweite Netzwerkverbindung an das Wäschepflegegerät zu übertragen, und wobei die Gerätesteuerung des Wäschepflegegeräts ausgebildet ist, das generierte Steuerungsprogramm für das Wäschepflegegerät zu aktivieren, um das generierte Steuerungsprogramm auf dem Wäschepflegegerät basierend auf der Eingabe des Nutzers des Systems auszuführen.

Dadurch wird der technische Vorteil erreicht, dass die entsprechend für das Haushaltsgerät genannten Vorteile ebenso gelten, wenn als ein Haushaltsgerät ein Wäschepflegegerät zum Pflegen von Wäsche ausgewählt wird.

Insbesondere ist das Wäschepflegegerät ein Trommel-freies Wäschepflegegerät, also ein Wäschepflegegerät, welches keine rotierbare Wäschetrommel zur Aufnahme von Wäsche aufweist.

In einer vorteilhaften Ausführungsform umfasst der zumindest eine Eingabeparameter einen Wäscheparameter, insbesondere ein Beladungsgewicht, ein Beladungsvolumen, einen Wäschetyp, eine Textilart, eine Farbe, einen und/oder einen Verschmutzungsgrad, von in das Wäschepflegegerät einzubringender Wäsche.

Dadurch wird der technische Vorteil erreicht, dass ein auf die zu pflegenden Wäsche spezifisch angepasstes Steuerungsprogramm durch die Modulsteuerung des Steuerungsmoduls generiert wird.

Beispielweise kann in Abhängigkeit des Beladungsgewichts und/oder des Beladungsvolumens die Modulsteuerung das generierte Steuerungsprogramm dahingehend optimieren, dass eine auf das Beladungsgewicht und/oder das Beladungsvolumen hin optimierte Menge von Waschflüssigkeit der Wäsche zugeführt wird.

Bei einem besonders empfindlichen Wäschetyp, wie z.B. empfindliche Blusen, oder bei einer besonders empfindlichen Textilart oder bei der besonders auswaschgefährdeten Farbe, wie z.B. rot, kann die Modulsteuerung das generierte Steuerungsprogramm dahingehend optimieren, dass z.B. eine geringe Temperatur der Waschflüssigkeit während des Wäschepflegevorgangs bereitgestellt wird.

Andererseits kann bei einem besonders intensiven Geruch und/oder einem hohen Verschmutzungsgrad des Wäschestücks die Modulsteuerung das generierte Steuerungsprogramm dahingehend optimieren, dass durch eine an den Verschmutzungstyp angepasste Temperatur eine besonders intensive Reinigung und damit effektive Verschmutzungs-, bzw. Geruchsentfernung sichergestellt wird.

In einer vorteilhaften Ausführungsform umfasst das generierte Steuerungsprogramm zumindest einen Steuerungsparameter für das Wäschepflegegerät, wobei der Steuerungsparameter insbesondere die Dauer des Wäschepflegeprogramms, die Anzahl und Dauer von verschiedenen Schritten des Wäschepflegeprogramms, die Temperatur von Waschflüssigkeit während des Wäschepflegeprogramms oder von verschiedenen Schritten des Wäschepflegeprogramms, die Menge von zugeführter Wäschepflegesubstanz, und/oder die Menge von zugeführter Waschflüssigkeit.

Dadurch wird der technische Vorteil erreicht, dass die Modulsteuerung des Steuerungsmoduls bei der Generierung des Steuerungsprogramms die Steuerungsparameter für das auf dem Wäschepflegegerät auszuführende Wäschepflegeprogramm spezifisch anpassen kann.

Beispielweise kann bei einer stark verschmutzten Wäsche als Steuerungsparameter die Dauer des Wäschepflegeprogramms, bzw. die Anzahl der Schritte des Wäschepflegeprogramms erhöht werden, bzw. die Temperatur von Waschflüssigkeit, bzw. die Menge von Wäschepflegesubstanz an den Verschmutzungstyp angepasst werden, indem beispielsweise ein Vorwaschschritt dem Steuerungsprogramm hinzugefügt wird, und/oder in dem während des Hauptwaschgangs die Temperatur und/oder die Menge an zugeführter Wäschepflegesubstanz an den Verschmutzungstyp angepasst wird.

In einer vorteilhaften Ausführungsform umfasst die Eingabevorrichtung ein Mobilgerät, insbesondere Laptop oder Tablet oder Smartphone, des Nutzers, wobei der Nutzer die Eingabeparameter manuell in das Mobilgerät eingeben kann, oder wobei das Mobilgerät eine optische Erfassungseinrichtung, insbesondere Kamera aufweist, welche ausgebildet ist, den Eingabeparameter automatisch zu erfassen.

Dadurch wird der technische Vorteil erreicht, dass durch das Mobilgerät eine für den Nutzer des Haushaltsgeräts einfach durchzuführende Eingabe des Eingabeparameters ermöglicht wird. Beispielsweise kann das Mobilgerät eine mit der Modulsteuerung des Steuerungsmoduls kompatible App aufweisen, durch welche der durch den Nutzer eingegebene Eingabeparameter durch die erste Netzwerkverbindung einfach von dem Mobilgerät an das Steuerungsmodul übertragen und von der Modulsteuerung zur Generierung des Steuerungsprogramms verwendet werden kann.

Hierbei kann der Nutzer den Eingabeparameter entweder manuell in das Mobilgerät eingeben, z.B. bei einem Wäschepflegegerät bestimmte Wäscheparameter des Wäschepflegeprogramms, wie z.B. Textilart und/oder Verschmutzungsgrad.

Alternativ kann das Mobilgerät auch eine optische Erfassungseinrichtung, insbesondere Kamera aufweisen, durch welche der Eingabeparameter automatisch erfasst wird, z.B. kann der Nutzer bei einem Wäschepflegegerät die zu pflegende Wäsche fotografieren, und die App, bzw. die mit der App kommunizierende Modulsteuerung des Steuerungsmoduls kann basierend auf den Fotos der Wäsche den Eingabeparameter, wie z.B. Textilart und/oder Verschmutzungsgrad selbstständig bestimmen.

In einer vorteilhaften Ausführungsform ist die Eingabevorrichtung direkt mit dem Haushaltsgerät verbunden und umfasst eine optische Erfassungseinrichtung, insbesondere Kamera, welche ausgebildet ist, den Eingabeparameter automatisch zu erfassen.

Dadurch wird der technische Vorteil erreicht, dass der Nutzer mittels der direkt mit dem Haushaltsgerät verbunden Eingabevorrichtung einfach und vorteilhaft durch Fotographie den entsprechenden Eingabeparameter bestimmen kann.

Eine direkt mit dem Haushaltsgerät verbundene Eingabevorrichtung kann insbesondere durch ein Kabel mit dem Haushaltsgerät direkt physisch verbunden sein, oder kann durch eine drahtlose Verbindung direkt mit dem Haushaltsgerät verbunden sein, so dass der Nutzer die Eingabevorrichtung dem Haushaltsgerät direkt zuordnen kann.

In einer vorteilhaften Ausführungsform weist das Haushaltsgerät und/oder die Eingabevorrichtung ein Anzeigeelement, insbesondere einen Bildschirm, auf, welches ausgebildet ist, den in die Eingabevorrichtung eingegebenen Eingabeparameter darzustellen, und/oder welches ausgebildet ist, Steuerungsparameter des durch die Modulsteuerung generierten Steuerungsprogramm darzustellen.

Dadurch wird der technische Vorteil erreicht, dass der Nutzer zeitnah durch das Anzeigeelement, insbesondere Bildschirm, eine korrekte Eingabe der Eingabeparameter überprüfen kann, und/oder dass der Nutzer zeitnah verfolgen kann, inwiefern sich die Steuerungsparameter des generierten Steuerungsprogramms in Abhängigkeit der Eingabeparameter verändern.

Beispielsweise kann die Eingabevorrichtung direkt selbst ein entsprechendes Anzeigeelement, insbesondere Bildschirm, aufweisen, und/oder das Haushaltsgerät kann eine entsprechende Anzeigevorrichtung, insbesondere Bildschirm aufweisen, welches steuerungstechnisch mit der Eingabevorrichtung verbunden ist, um den in die Eingabevorrichtung eingegebenen Eingabeparameter darzustellen, und/oder welches steuerungstechnisch mit der dem Steuerungsmodul verbunden ist, um die Steuerungsparameter des generierten Steuerungsprogramms darzustellen.

Insbesondere können auch die angepassten Steuerungsparameter des Steuerungsprogramms auf einem Anzeigeelement, insbesondere Bildschirm, des Haushaltsgerät für den Nutzer optisch dargestellt werden, so dass der Nutzer, insbesondere in Echtzeit, nachverfolgen kann, wie sich entsprechende durch ihn bereitgestellte Eingabeparameter auf die entsprechenden Steuerungsparameter des durch die Modulsteuerung generierten Steuerungsprogramms auswirken.

In einer vorteilhaften Ausführungsform weist die Modulsteuerung einen Datenspeicher auf, auf welchem eine Mehrzahl von Programmblöcken zum Steuern des Haushaltsgeräts hinterlegt ist, wobei jedem Programmblock zumindest ein veränderbarer Steuerungsparameter zugeordnet ist, wobei die Modulsteuerung ausgebildet ist, basierend auf dem zumindest einen übertragenen Eingabeparameter Programmblöcke aus der Mehrzahl von Programmblöcken auszuwählen und basierend auf dem zumindest einen übertragenen Eingabeparameter die jeweiligen veränderbaren Steuerungsparameter jeweils auf einen Wert festzulegen, um das Steuerungsprogramm zu generieren.

Dadurch wird der technische Vorteil erreicht, dass das Steuerungsmodul eine vorteilhafte Generierung des Steuerungsprogramms aus den ausgewählten und angepassten Programmblöcken sicherstellt.

Bei der Generierung des Steuerungsprogramms kann die Modulsteuerung in Abhängigkeit des zumindest einen übertragenen Eingabeparameters entscheiden, welche spezifischen Programmblöcke in das Steuerungsprogramm übernommen werden, bzw. welche spezifischen Programmblöcke in das Steuerungsprogramm nicht übernommen werden.

Ist das Haushaltsgerät insbesondere ein Wäschepflegegerät kann das Steuerungsmodul beispielsweise in Abhängigkeit des Verschmutzungsgrads der Wäsche als Eingabeparameter festlegen, ob ein Vorwaschprogramm in das Steuerungsprogramm aufgenommen wird oder nicht.

Bei der Generierung des Steuerungsprogramms kann die Modulsteuerung ferner in Abhängigkeit des zumindest einen übertragenen Eingabeparameters entscheiden, auf welchen Wert der veränderbare Steuerungsparameter des jeweiligen Programmblocks festgelegt wird.

Ist das Haushaltsgerät insbesondere ein Wäschepflegegerät kann der veränderbare Steuerungsparameter für den Hauptwaschgang als ein Beispiel für einen Programmblock beispielsweise eine variable Waschtemperatur zwischen 30 °C und 90°C umfassen. Wurde als Eingabeparameter an das Steuerungsmodul beispielsweise eine stark verschmutzte Kochwäsche übermittelt, kann die Modulsteuerung bei der Generierung des Steuerungsprogramms beispielsweise die Waschtemperatur auf einen Wert von 90 °C festlegen.

In einer vorteilhaften Ausführungsform ist die Modulsteuerung ausgebildet, in einem ersten Generierungsschritt ein Vorsteuerungsprogramm für das Haushaltsgerät basierend auf dem übertragenen zumindest einen Eingabeparameter zu generieren, und ist die Modulsteuerung ausgebildet, in einem sich an dem ersten Generierungsschritt anschließenden zweiten Generierungsschritt, das Vorsteuerungsprogramm basierend auf zumindest einem weiteren Eingabeparameter zu aktualisieren, um das Steuerungsprogramm für das Wäschepflegegerät zu generieren, wobei der weitere Eingabeparameter insbesondere einen Gerätetyp des Haushaltsgeräts umfasst.

Dadurch wird der technische Vorteil erreicht, dass eine besonders effiziente Generierung des Steuerungsprogramms durch die Modulsteuerung sichergestellt werden kann. In dem ersten Generierungsschritt wird anhand des durch den Nutzer eingegebenen Eingabeparameters das Vorsteuerungsprogramm generiert, in welchem die optimale Bereiche der Steuerungsparameter, bzw. die einzelnen Programmblöcke in Abhängigkeit der Benutzereingabe, jedoch unabhängig vom Gerätetyp des verwendeten Haushaltsgeräts festgelegt werden. In dem sich anschließenden zweiten Generierungsschritt erfolgt anschließend eine Feinabstimmung der Steuerungsparameter, bzw. der einzelnen Programmblöcke in Abhängigkeit des weiteren Eingabeparameters, insbesondere in Abhängigkeit des Gerätetyps des Haushaltsgeräts, durch die Modulsteuerung.

Ist das Haushaltsgerät beispielsweise ein Wäschepflegegerät und umfasst der durch den Nutzer übermittelte Eingabeparameter eine stark verschmutzte Kochwäsche, so kann die Modulsteuerung beispielsweise während des ersten Generierungsschritts in dem Vorsteuerungsproramm die Temperatur des Hauptwaschgangs in einem Bereich von 60°C bis 90°C vorfestlegen. Wenn in dem anschließenden zweiten Generierungsschritt anhand des weiteren Eingabeparameters, insbesondere Gerätetyp des Wäschepflegegeräts, durch die Modulsteuerung festgestellt wird, dass der Gerätetyp maximal eine Temperatur von 60°C zulässt, kann die Modulsteuerung beispielsweise während des zweiten Generierungsschritts in dem erhaltenen Steuerungsprogramm die Temperatur des Hauptwaschgangs final auf 60°C festlegen.

Hierbei kann der weitere Eingabeparameter insbesondere in der Modulsteuerung hinterlegt sein, oder der weitere Eingabeparameter kann durch die Modulsteuerung über die zweite Netzwerkverbindung von dem Haushaltsgeräts abgefragt werden.

In einer vorteilhaften Ausführungsform ist die Modulsteuerung eingerichtet, einen selbstlernenden Algorithmus, insbesondere einen auf künstlicher Intelligenz basierenden selbstlernenden Algorithmus, auszuführen, um das Steuerungsprogramm zu generieren.

Dadurch wird der technische Vorteil erreicht, dass ein entsprechender selbstlernender Algorithmus der Modulsteuerung eine besonders effektive Generierung von einer Vielzahl von unterschiedlichen Steuerungsprogrammen ermöglicht. Insbesondere kann durch den selbstlernenden Algorithmus der Modulsteuerung eine iterative Verbesserung der Steuerungsprogramme erreicht werden, so dass ein entsprechendes Training des selbstlernenden Algorithmus der Modulsteuerung mit einer Vielzahl von unterschiedlichen Eingabeparameter und einer Vielzahl von unterschiedlichen Haushaltsgeräten zu einer schrittweisen Verbesserung der Qualität der generierten Steuerungsprogramme führt.

Die Selbstlernfähigkeit des selbstlernenden Algorithmus der Modulsteuerung kann beispielsweise durch den Hersteller des Systems ausgenutzt werden, indem beispielsweise während einer Trainingsphase des selbstlernenden Algorithmus bei Vielzahl von einer unterschiedlichen Haushaltsgeräten und einer entsprechenden Vielzahl von unterschiedlichen Nutzungsbedingungen das durch den selbstlernenden Algorithmus der Modulsteuerung generierte Steuerungsprogramm analysiert und bewertet wird. Die entsprechenden Bewertungen der generierten Steuerungsprogramme können im Rahmen einer Feedback-Schleife an die Modulsteuerung zurückübermittelt werden, so dass der selbstlernenden Algorithmus durch positive und/oder negative Bewertungen der generierten Steuerungsprogramme dazu lernt und sich selbst verbessert.

Ein entsprechendes Feedback-System kann nicht nur durch den Hersteller des Systems ausgenutzt werden, sondern auch durch den Benutzer selbst umgesetzt werden. Hierbei kann der Nutzer eines bestimmten Haushaltsgeräts für unterschiedliche Nutzungsbedingungen selbst das durch die Modulsteuerung generierte Steuerungsprogramm bewerten, z.B. über eine App der als Mobilgerät ausgebildeten Eingabevorrichtung und/oder über eine Eingabe am Haushaltsgerät selbst, wobei die Bewertung des Nutzers an das Steuerungsmodul übertragen wird. Anhand einer Vielzahl von unterschiedlichen positiven und/oder negativen Bewertungen für eine Vielzahl von Nutzungsbedingungen und für eine Vielzahl von unterschiedlichen Haushaltsgeräten kann sich somit der selbstlernenden Algorithmus der Modulsteuerung kontinuierlich verbessern.

Insbesondere kann der selbstlernende Algorithmus auch Nutzer-spezifische Präferenzen berücksichtigen, so dass die durch die Modulsteuerung generierten Steuerungsprogramme auch individuell auf spezifische Nutzer hin angepasst werden können. Wählt beispielsweise ein Nutzer A eines identischen Wäschepflegegeräts bei identischer Wäschebeladung im Vergleich zu einem Nutzer B immer eine niedrigere Temperatur, dann können die entsprechenden Wünsche des Nutzers A durch den selbstlernenden Algorithmus berücksichtigt werden, bzw. kann der selbstlernende Algorithmus den Nutzer A auf die Möglichkeit einer höheren Temperaturauswahl hinweisen.

In einer vorteilhaften Ausführungsform weist die erste Netzwerkverbindung einen der Eingabevorrichtung zugeordneten Eingabesender, welcher ausgebildet ist, den zumindest einen Eingabeparameter an das Steuerungsmodul zu übertragen, und einen dem Steuerungsmodul zugeordneten Eingabeempfänger, welcher ausgebildet ist, den Eingabeparameter zu empfangen, auf, und/oder weist die zweite Netzwerkverbindung einen dem Steuerungsmodul zugeordneten Modulsender, welcher ausgebildet ist, das generierte Steuerungsprogramm an das Haushaltsgerät zu übertragen, und einen dem Haushaltsgerät zugeordneten Geräteempfänger, welcher ausgebildet ist, das generierte Steuerungsprogramm zu empfangen, auf.

Dadurch wird der technische Vorteil erreicht, dass durch den Eingabesender der Eingabevorrichtung und den Eingabeempfänger des Steuerungsmoduls eine wirksame erste Netzwerkverbindung zwischen der Eingabevorrichtung und dem Eingabeempfänger zum Übertragen des Eingabeparameters von der Eingabevorrichtung an das Steuerungsmodul sichergestellt werden kann, bzw. dass durch den Modulsender des Steuerungsmoduls und den Geräteempfänger des Haushaltsgeräts eine wirksame zweiten Netzwerkverbindung zwischen der Modulsender und dem Geräteempfänger zum Übertragen des generierten Steuerungsprogramms von dem Steuerungsmodul an das Haushaltsgerät sichergestellt werden kann.

Die erste und zweite Netzwerkverbindung können insbesondere alle gängigen drahtgebundenen und/oder drahtlosen Datenverbindungen umfassen, wie z.B. lokale Verbindungen, z.B. Ethernet, globale Verbindungen, z.B. Internet, und/oder Funkverbindungen, wie z.B. WLAN oder Bluetooth.

In einer vorteilhaften Ausführungsform ist das Wäschepflegegerät ein Trommel-freies Wäschepflegegerät.

Dadurch wird der technische Vorteil erreicht, dass bei einem Trommel-freien Wäschepflegegerät, also bei einem Wäschepflegegerät ohne eine rotierbare Wäschetrommel zur Aufnahme der Wäsche eine besonders wirksame Generierung von Steuerungsprogrammen sichergestellt werden kann.

Gemäß einem zweiten Aspekt wird die erfindungsgemäße Aufgabe durch ein Verfahren zum Steuern eines Systems mit einem Haushaltsgerät gelöst, wobei das System das Haushaltsgerät mit einer Gerätesteuerung, ein Steuerungsmodul mit einer Modulsteuerung und eine durch einen Nutzer des Systems bedienbare Eingabevorrichtung umfasst, wobei das Steuerungsmodul durch eine erste Netzwerkverbindung mit der Eingabevorrichtung steuerungstechnisch verbunden ist, und wobei das Steuerungsmodul mit dem Haushaltsgerät durch eine zweite Netzwerkverbindung steuerungstechnisch verbunden ist, wobei das Verfahren die folgenden Verfahrensschritte umfasst, Übertragen zumindest eines auf der Eingabe des Nutzers des Systems basierenden Eingabeparameters von der Eingabevorrichtung durch die erste Netzwerkverbindung an das Steuerungsmodul, Generieren eines Steuerungsprogramms für das Haushaltsgerät basierend auf dem übertragenen zumindest einen Eingabeparameter durch die Modulsteuerung, Übertragen des generierten Steuerungsprogramms für das Haushaltsgerät von dem Steuerungsmodul durch die zweite Netzwerkverbindung an das Haushaltsgerät, und Aktivieren des generierten Steuerungsprogramms durch die Gerätesteuerung des Haushaltsgeräts, um das generierte Steuerungsprogramm auf dem Haushaltsgerät basierend auf der Eingabe des Nutzers des Systems auszuführen.

Dadurch wird der technische Vorteil erreicht, dass eine auf der Eingabe des Nutzers basierende vorteilhafte Generierung des Steuerungsprogramms sichergestellt werden kann.

In einer vorteilhaften Ausführungsform umfasst das Haushaltsgerät ein Wäschepflegegerät mit einer Gerätesteuerung, das Steuerungsmodul mit der Modulsteuerung und die durch einen Nutzer des Systems bedienbare Eingabevorrichtung, wobei das Steuerungsmodul durch die erste Netzwerkverbindung mit der Eingabevorrichtung steuerungstechnisch verbunden ist, und wobei das Steuerungsmodul mit dem Wäschepflegegerät durch die zweite Netzwerkverbindung steuerungstechnisch verbunden ist, wobei Verfahren die folgenden Verfahrensschritte umfasst, Übertragen zumindest eines auf der Eingabe des Nutzers des Systems basierenden Eingabeparameters von der Eingabevorrichtung durch die erste Netzwerkverbindung an das Steuerungsmodul, Generieren eines Steuerungsprogramms für das Wäschepflegegerät basierend auf dem übertragenen zumindest einen Eingabeparameter durch die Modulsteuerung, Übertragen des generierten Steuerungsprogramms für das Wäschepflegegerät von dem Steuerungsmodul durch die zweite Netzwerkverbindung an das Wäschepflegegerät, und Aktivieren des generierten Steuerungsprogramms durch die Gerätesteuerung des Wäschepflegegeräts, um das generierte Steuerungsprogramm auf dem Wäschepflegegerät basierend auf der Eingabe des Nutzers des Systems auszuführen.

Dadurch wird der technische Vorteil erreicht, dass eine wirksame Generierung eines Steuerungsprogramms für das Wäschepflegegerät sichergestellt werden kann.

Gemäß einem dritten Aspekt wird die erfindungsgemäße Aufgabe durch ein Computerprogramm zum Ablaufen auf dem Steuerungsmodul gemäß dem zweiten Aspekt gelöst, wobei das Computerprogramm ausgebildet ist, den folgenden Verfahrensschritt auszuführen, Generieren eines Steuerungsprogramms für das Haushaltsgerät basierend auf dem übertragenen zumindest einen Eingabeparameter durch die Modulsteuerung, oder Generieren eines Steuerungsprogramms für das Wäschepflegegerät basierend auf dem übertragenen zumindest einen Eingabeparameter durch die Modulsteuerung.

Die Ausführungsformen des Haushaltsgeräts gemäß dem ersten Aspekt sind ebenfalls Ausführungsformen für das Verfahren gemäß dem zweiten Aspekt und für das Computerprogramm gemäß dem dritten Aspekt. Die Ausführungsformen des Verfahrens gemäß dem zweiten Aspekt sind ebenfalls Ausführungsformen für das Haushaltsgerät gemäß dem ersten Aspekt und das Computerprogramm gemäß dem dritten Aspekt.

Weitere Ausführungsbeispiele werden Bezug nehmend auf die beiliegenden Zeichnungen erläutert. Es zeigen:
- Fig. 1: eine schematische Ansicht eines Systems zum Steuern eines Haushaltsgeräts gemäß einer Ausführungsform der vorliegenden Anmeldung; und
- Fig. 2: eine schematische Darstellung eines Verfahrens zum Steuern eines Systems mit einem Haushaltsgerät gemäß einer Ausführungsform der vorliegenden Anmeldung.

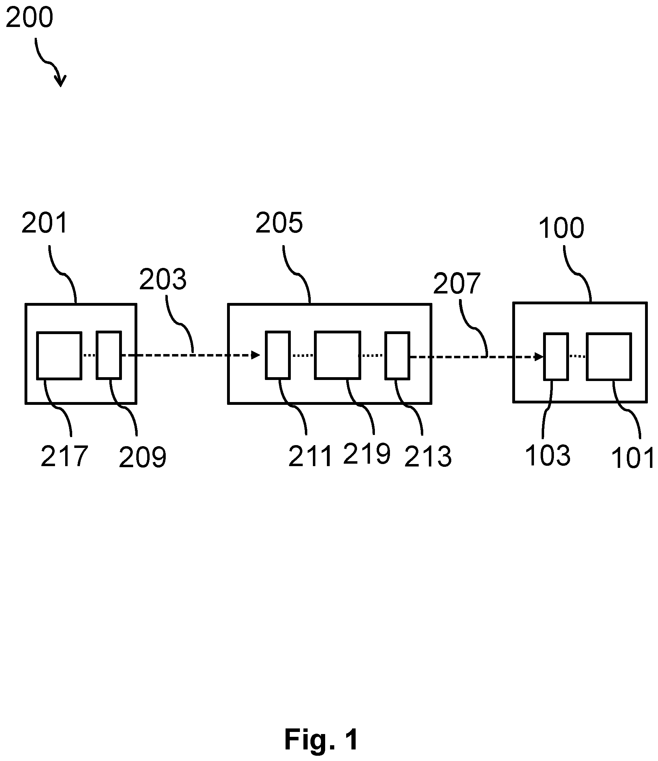

Fig. 1 zeigt eine schematische Ansicht eines Systems zum Steuern eines Haushaltsgeräts gemäß einer Ausführungsform der vorliegenden Anmeldung.

Das in Fig. 1 dargestellte System 200 umfasst ein Haushaltsgerät 100, also ein Gerät, das zur Haushaltsführung eingesetzt wird. Das in Fig. 1 dargestellte Haushaltsgerät 100 kann ein Haushaltsgroßgerät 100 sein, wie beispielsweise ein Wäschepflegegerät, insbesondere umfassend eine Waschmaschine oder ein Wäschetrockner, oder eine Geschirrspülmaschine. Das in Fig. 1 dargestellte Haushaltsgerät 100 kann aber auch ein Haushaltskleingerät 100 sein, wie beispielsweise ein Warmwasserbereiter, ein Kaffeevollautomat, eine Küchenmaschine oder ein Teppichreinigungsgerät.

Insbesondere ist das Haushaltsgerät 100 als ein Wäschepflegegerät ausgebildet, welches von einem Nutzer bedient wird, um Wäsche zu pflegen. Das in Fig. 1 nur schematisch dargestellte Haushaltsgerät 100, insbesondere Wäschepflegegerät umfasst insbesondere ein in Fig. 1 nicht dargestelltes Substanzaufnahmeelement zur Aufnahme von Wäschepflegesubstanz, insbesondere Waschmittel, und einen in Fig. 1 nicht dargestellten Wäschebereich, insbesondere Wäschekammer, zur Aufnahme von in dem Wäschepflegegerät zu pflegender Wäsche.

Das System 200 umfasst ferner eine Eingabevorrichtung 201, welche von einem Nutzer des Systems 200 bedient werden kann, wobei der Nutzer die Eingabevorrichtung für eine Eingabe nutzen kann, um dadurch einen Eingabeparameter zu generieren.

Die Eingabevorrichtung 201 ist durch eine erste Netzwerkverbindung 203 mit einem Steuerungsmodul 205 des Systems 200 verbunden. Das Steuerungsmodul 205 des Systems 200 ist durch eine zweite Netzwerkverbindung 207 mit dem Haushaltsgerät 100 des Systems 200 verbunden.

Die erste Netzwerkverbindung 203 umfasst einen in der Eingabevorrichtung 201 angeordneten Eingabesender 209, welcher ausgebildet ist, Daten an das Steuerungsmodul 205 zu übertragen, und einen in dem Steuerungsmodul 205 angeordneten Eingabeempfänger 211, welcher ausgebildet die von dem Eingabesender 209 übertragenen Daten zu empfangen.

Die zweite Netzwerkverbindung 207 umfasst einen in dem Steuerungsmodul 205 angeordneten Modulsender 213, welcher ausgebildet ist, Daten an das Haushaltsgerät 100 zu übertragen, und einen in dem Haushaltsgerät 100 angeordneten Geräteempfänger 103, welcher ausgebildet die von dem Modulsender 213 übertragenen Daten zu empfangen.

Die Eingabevorrichtung 201 weist eine Eingabesteuerung 217 auf, welche mit dem Eingabesender 209 steuerungstechnisch verbunden ist. Das Steuerungsmodul 205 weist eine Modulsteuerung 219 auf, welche mit dem Eingabeempfänger 211 und dem Modulsender 213 steuerungstechnisch verbunden ist. Das Haushaltsgerät 100 weist eine Gerätesteuerung 101 auf, welche mit dem Geräteempfänger 103 steuerungstechnisch verbunden ist.

Die erste Netzwerkverbindung 203 und/oder die zweite Netzwerkverbindung 207 umfasst insbesondere eine drahtgebundene und/oder drahtlose erste und/oder zweite Netzverbindung 203, 207.

Die Eingabevorrichtung 201 ist durch den Nutzer des Systems 200 bedienbar und ist ausgebildet basierend auf der Eingabe des Nutzers zumindest einen Eingabeparameter durch die erste Netzwerkverbindung 203 an das Steuerungsmodul 205 zu übertragen.

Ist das Haushaltsgeräts 100 ein Wäschepflegegerät umfasst der Eingabeparameter einen Wäscheparameter, insbesondere ein Beladungsgewicht, ein Beladungsvolumen, einen Wäschetyp, z.B. Hose oder Socke, eine Textilart, z.B. Wolle, eine Farbe, einen Geruch, und/oder einen Verschmutzungsgrad von in das Wäschepflegegerät einzubringender Wäsche.

Insbesondere umfasst die Eingabevorrichtung 201 ein Mobilgerät, insbesondere Laptop oder Tablet oder Smartphone, des Nutzers des Systems 200, wobei der Nutzer, den zumindest einen Eingabeparameter manuell in das Mobilgerät eingeben kann, insbesondere über eine App des Mobilgeräts. Alternativ oder zusätzlich kann das Mobilgerät kann insbesondere eine optische Erfassungseinrichtung, insbesondere Kamera, aufweisen, welche ausgebildet ist, den zumindest einen Eingabeparameter automatisch zu erfassen, z.B. in dem Nutzer mittels der Eingabevorrichtung die in das Wäschepflegegerät einzubringenden Wäsche fotografiert.

Auch wenn dies in der Fig. 1 nicht dargestellt ist, kann die Eingabevorrichtung 201 alternativ auch direkt mit dem Haushaltsgeräts 100, insbesondere Wäschepflegegerät, verbunden sein, insbesondere durch eine in Fig. 1 nicht dargestellte dritte Netzwerkverbindung, insbesondere drahtgebundene und/oder drahtlose Verbindung.

Somit kann der Nutzer des Systems 200 durch Eingabe in die Eingabevorrichtung 201 einen Eingabeparameter, insbesondere Wäscheparameter, bereitstellen, welche insbesondere durch die Eingabesteuerung 217 verarbeitet wird, und durch die erste Netzwerkverbindung 203 an das Steuerungsmodul 205 übertragen wird.

Das Haushaltsgerät 100 kann hierbei ein in Fig. 1 nicht dargestelltes Anzeigeelement, insbesondere einen Bildschirm, aufweisen, welches ausgebildet ist, den in der Eingabevorrichtung 201 eingegebenen zumindest einen Eingabeparameter darzustellen. Dadurch kann der Nutzer beim Eingeben der Eingabeparameter, insbesondere der Wäschestücke, visuell den Eingabeparameter auf dem Anzeigeelement verfolgen und überprüfen.

Die Modulsteuerung 219 des Steuerungsmoduls 205 ist ausgebildet ein Steuerungsprogramm für das Haushaltsgerät 100, insbesondere Wäschepflegegerät, basierend auf dem zumindest einen übertragenen Eingabeparameter, insbesondere Wäscheparameter, zu generieren.

Insbesondere umfasst das Steuerungsmodul 205 einen von dem Haushaltsgerät 100, insbesondere Wäschepflegegerät, räumlich separiertes Element des Systems 200, z.B. einen Server oder eine Computer-Cloud.

Das Steuerungsprogramm umfasst insbesondere zumindest einen Steuerungsparameter, welcher von der Gerätesteuerung 101 des Haushaltsgeräts 100 ausgelesen werden können, so dass die entsprechenden Elemente des Haushaltsgeräts 100 entsprechend angesteuert werden können.

Ist das Haushaltsgerät 100 ein Wäschepflegegerät umfasst der zumindest eine Steuerungsparameter insbesondere eine Dauer des Wäschepflegeprogramms, die Anzahl und Dauer von verschiedenen Schritten des Wäschepflegeprogramms, die Temperatur von Waschflüssigkeit während des Wäschepflegeprogramms oder während verschiedenen Schritten des Wäschepflegeprogramms und/oder die Menge der während des Wäschepflegeprogramms zugeführten Wäschepflegesubstanz, bzw. Waschflüssigkeit.

In Abhängigkeit des durch den Nutzer eingegeben Eingabeparameters, insbesondere Wäscheparameters, generiert die Modulsteuerung 219 des Steuerungsmoduls 205 ein auf den Eingabeparameter hin optimiertes Steuerungsprogramm für das Haushaltsgerät 100, insbesondere Wäschepflegegerät.

Im Gegensatz zu herkömmlichen Steuersystem ruft die Modulsteuerung nicht lediglich hinterlegte Programme ab, sondern generiert, bzw. erschafft, bzw. programmiert, ein auf den spezifischen Fall individuell angepasstes Steuerungsprogramm.

Hierbei weist die Modulsteuerung 219 insbesondere einen in Fig. 1 nicht dargestellten Datenspeicher auf, auf welchem eine Mehrzahl von Programmblöcken hinterlegt sind, wobei jedem Programmblock ein veränderbarer Steuerungsparameter zugeordnet ist. Die Modulsteuerung 219 ist hierbei insbesondere ausgebildet, basierend auf dem zumindest einen übertragbaren Eingabeparameter Programmblöcke der Mehrzahl von Programmblöcken auszuwählen und basierend auf dem zumindest einen übertragbaren Eingabeparameter den zumindest einen veränderbaren Steuerungsparameter auf einen Wert festzulegen, um das Steuerungsprogramm zu generieren.

Somit dienen die in der Modulsteuerung 219 hinterlegten einzelnen Programmblöcke als Grundbausteine für das durch die Modulsteuerung 219 generierte Steuerungsprogramm, und die Modulsteuerung 219 kann auf Basis des zumindest einen übertragbaren Eingabeparameters bestimmte Programmblöcke in dem generierten Steuerungsprogramm verwenden, nicht verwenden, bzw. entsprechende mögliche Bereiche der Steuerungsparameter der jeweiligen Programmblöcke auf einen spezifischen Wert festlegen.

Insbesondere ist die Modulsteuerung 219 hierbei eingerichtet, einen selbstlernenden Algorithmus, insbesondere einen auf künstlicher Intelligenz basierenden selbstlernenden Algorithmus, auszuführen, um das Steuerungsprogramm zu generieren.

Beispielsweise ist die Modulsteuerung 219 ausgebildet, in einem ersten Generierungsschritt ein Vorsteuerungsprogramm für das Haushaltsgerät 100, insbesondere Wäschepflegegerät basierend auf dem übertragenen zumindest einen Eingabeparameter zu generieren, und ist die Modulsteuerung 219 ausgebildet, in einem sich an dem ersten Generierungsschritt anschließenden zweiten Generierungsschritt, das Vorsteuerungsprogramm basierend auf zumindest einem weiteren Eingabeparameter zu aktualisieren, um das Steuerungsprogramm für das Wäschepflegegerät zu generieren, wobei die weitere Eingabeparameter insbesondere einen Gerätetyp des Haushaltsgeräts 100 umfasst.

Insbesondere ist der weitere Eingabeparameter in der Modulsteuerung 219 hinterlegt, oder der weitere Eingabeparameter kann durch die zweite Netzverbindung von dem Haushaltsgerät 100 abgefragt werden.

Das generierte Steuerungsprogramm wird anschließend von dem Steuerungsmodul 205 durch die zweite Netzverbindung 207 an das Haushaltsgerät 100, insbesondere Wäschepflegegerät, übertragen, insbesondere von dem Modulsender 213 an den Geräteempfänger 103 übertragen.

Die Gerätesteuerung 101 des Wäschepflegegeräts ist ausgebildet, das generierte Steuerungsprogramm für das Haushaltsgerät 100, insbesondere Wäschepflegegerät zu aktivieren, um das generierte Steuerungsprogramm auf dem Haushaltsgerät 100, insbesondere Wäschepflegegerät basierend auf der Eingabe des Nutzers des Systems 200 auszuführen.

Somit wird eine vorteilhafte Generierung eines Steuerprogramms für ein Haushaltsgerät 100, insbesondere Wäschepflegegerät, außerhalb des Haushaltsgeräts 100, z.B. dezentral auf einem externen Server sichergestellt, wodurch Ressourcen, wie z.B. Prozessorkapazitäten und Speicherplatz auf dem Haushaltsgerät 100 eingespart werden können, wodurch sich die Herstellungskosten und der Herstellungsaufwand bei der Herstellung des Haushaltsgeräts 100 reduziert.

Hierbei ist die Modulsteuerung 219 auf dem Steuerungsmodul 205 mit ausreichenden Ressourcen ausgestattet, um eine besonders effektive und damit zeitnahe Generierung des Steuerungsprogramms sicherzustellen und zeitnah das generierte Steuerungsprogramm an das Haushaltsgerät 100 zu übertragen, so dass annähernd unmittelbar basierend auf den spezifischen durch den Nutzer eingegeben Eingabeparameter ein entsprechend individuell auf den jeweiligen Wäschepflegevorgang abgestimmtes Steuerungsprogramm durch die Modulsteuerung 219 generiert wird, wodurch ein hochflexibler, pflegevorteilhafter und Ressourcen-schonender Wäschepflegevorgang sichergestellt werden kann.

Insbesondere können auch die angepassten Steuerungsparameter des Steuerungsprogramms auf einem Anzeigeelement, insbesondere Bildschirm, des Haushaltsgerät für den Nutzer optisch dargestellt werden, so dass der Nutzer, insbesondere in Echtzeit, nachverfolgen kann, wie sich entsprechende durch ihn bereitgestellte Eingabeparameter auf die entsprechenden Steuerungsparameter des durch die Modulsteuerung generierten Steuerungsprogramms auswirken.

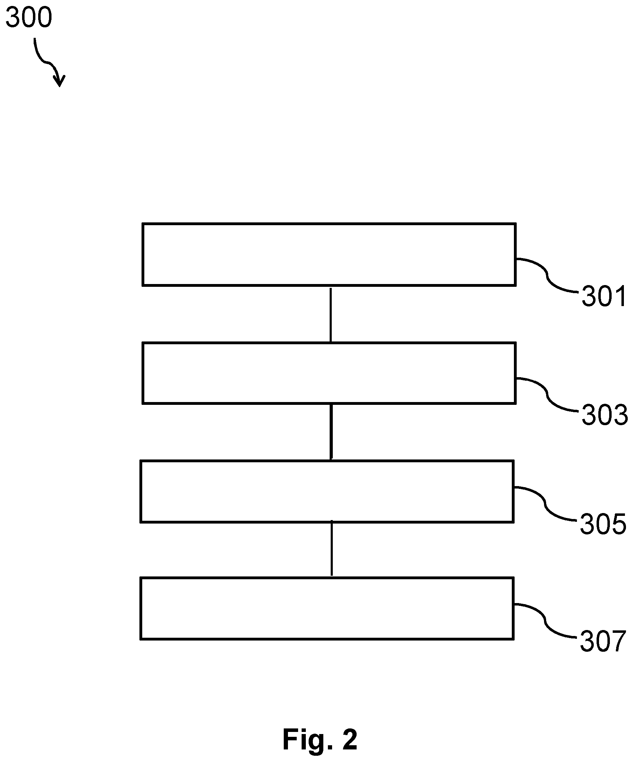

Fig. 2 zeigt eine schematische Darstellung eines Verfahrens zum Steuern eines Systems mit einem Haushaltsgerät.

Das Verfahren 300 umfasst als ersten Verfahrensschritt das Übertragen 301 von zumindest einem auf der Eingabe des Nutzers des Systems 200 basierenden Eingabeparameter von der Eingabevorrichtung 201 durch die erste Netzwerkverbindung 203 an das Steuerungsmodul 205.

Das Verfahren 300 umfasst als zweiten Verfahrensschritt das Generieren 303 eines Steuerungsprogramms für das Haushaltsgeräts 100 basierend auf dem übertragenen zumindest einen Eingabeparameter durch die Modulsteuerung 219.

Das Verfahren 300 umfasst als dritten Verfahrensschritt das Übertragen 305 des generierten Steuerungsprogramms für das Haushaltsgerät 100 von dem Steuerungsmodul 205 durch die zweite Netzwerkverbindung 207 an das Haushaltsgerät 100.

Das Verfahren 300 umfasst als vierten Verfahrensschritt das Aktivieren 307 des generierten Steuerungsprogramms durch die Gerätesteuerung 101 des Haushaltsgeräts 100, um das generierte Steuerungsprogramm auf dem Haushaltsgerät 100 basierend auf der Eingabe des Nutzers des Systems 200 auszuführen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 100: Haushaltsgerät
- 101: Gerätesteuerung
- 103: Geräteempfänger
- 200: System
- 201: Eingabevorrichtung
- 203: Erste Netzwerkverbindung
- 205: Steuerungsmodul
- 207: Zweite Netzwerkverbindung
- 209: Eingabesender
- 211: Eingabeempfänger
- 213: Modulsender
- 217: Eingabesteuerung
- 219: Modulsteuerung
- 300: Verfahren zum Steuern eines Systems mit einem Haushaltsgerät
- 301: Übertragen von einem Eingabeparameter
- 303: Generieren eines Steuerungsprogramms für das Haushaltsgeräts
- 305: Übertragen des generierten Steuerungsprogramms für das Haushaltsgerät
- 307: Aktivieren des generierten Steuerungsprogramms

## Patentansprüche

1. System (200) zum Steuern eines Haushaltsgeräts (100), wobei das System (200) das Haushaltsgerät (100) mit einer Gerätesteuerung (101), ein Steuerungsmodul (205) mit einer Modulsteuerung (219) und eine durch einen Nutzer des Systems (200) bedienbare Eingabevorrichtung (201) umfasst, wobei das Steuerungsmodul (205) durch eine erste Netzwerkverbindung (203) mit der Eingabevorrichtung (201) steuerungstechnisch verbunden ist, und wobei das Steuerungsmodul (205) mit dem Haushaltsgerät (100) durch eine zweite Netzwerkverbindung (207) steuerungstechnisch verbunden ist, wobei
die Eingabevorrichtung (201) ausgebildet ist, basierend auf der Eingabe des Nutzers des Systems (200) zumindest einen Eingabeparameter durch die erste Netzwerkverbindung (203) an das Steuerungsmodul (205) zu übertragen, **dadurch gekennzeichnet, dass**
die Modulsteuerung (219) des Steuerungsmoduls (205) ausgebildet ist, ein Steuerungsprogramm für das Haushaltsgerät (100) basierend auf dem übertragenen zumindest einen Eingabeparameter zu programmieren,
wobei das Steuerungsmodul (205) ausgebildet ist, das programmierte Steuerungsprogramm für das Haushaltsgerät (100) durch die zweite Netzwerkverbindung (207) an das Haushaltsgerät (100) zu übertragen, und
wobei die Gerätesteuerung (101) des Haushaltsgeräts (100) ausgebildet ist, das programmierte Steuerungsprogramm für das Haushaltsgerät (100) zu aktivieren, um das programmierte Steuerungsprogramm auf dem Haushaltsgerät (100) basierend auf der Eingabe des Nutzers des Systems (200) auszuführen,
wobei die Modulsteuerung (219) einen Datenspeicher aufweist, auf welchem eine Mehrzahl von Programmblöcken zum Steuern des Haushaltsgeräts (100) hinterlegt ist, wobei jedem Programmblock zumindest ein veränderbarer Steuerungsparameter zugeordnet ist, wobei die Modulsteuerung (219) ausgebildet ist, basierend auf dem zumindest einen übertragenen Eingabeparameter Programmblöcke aus der Mehrzahl von Programmblöcken auszuwählen und basierend auf dem zumindest einen übertragenen Eingabeparameter die jeweiligen veränderbaren Steuerungsparameter jeweils auf einen Wert festzulegen, um das Steuerungsprogramm zu programmieren.

2. System (200) nach Anspruch 1, **dadurch gekennzeichnet, dass** Haushaltsgerät (100) ein Wäschepflegegerät zum Pflegen von Wäsche ist, wobei das System (200) das Wäschepflegegerät mit einer Gerätesteuerung (101), das Steuerungsmodul (205) mit der Modulsteuerung (219) und die durch einen Nutzer des Systems (200) bedienbare Eingabevorrichtung (201) umfasst, wobei das Steuerungsmodul (205) durch die erste Netzwerkverbindung (203) mit der Eingabevorrichtung (201) steuerungstechnisch verbunden ist, und wobei das Steuerungsmodul (205) mit dem Wäschepflegegerät durch die zweite Netzwerkverbindung (207) steuerungstechnisch verbunden ist, wobei
die Eingabevorrichtung (201) ausgebildet ist, basierend auf der Eingabe des Nutzers des Systems (200) zumindest einen Eingabeparameter durch die erste Netzwerkverbindung (203) an das Steuerungsmodul (205) zu übertragen,
wobei die Modulsteuerung (219) des Steuerungsmoduls (205) ausgebildet ist, ein Steuerungsprogramm für das Wäschepflegegerät basierend auf dem übertragenen zumindest einen Eingabeparameter zu programmieren,
wobei das Steuerungsmodul (205) ausgebildet ist, das programmierte Steuerungsprogramm für das Wäschepflegegerät durch die zweite Netzwerkverbindung (207) an das Wäschepflegegerät zu übertragen, und
wobei die Gerätesteuerung (101) des Wäschepflegegeräts ausgebildet ist, das programmierte Steuerungsprogramm für das Wäschepflegegerät zu aktivieren, um das programmierte Steuerungsprogramm auf dem Wäschepflegegerät basierend auf der Eingabe des Nutzers des Systems (200) auszuführen.

3. System (200) nach Anspruch 2, **dadurch gekennzeichnet, dass** der zumindest eine Eingabeparameter einen Wäscheparameter, insbesondere ein Beladungsgewicht, ein Beladungsvolumen, einen Wäschetyp, eine Textilart, eine Farbe, einen Geruch, und/oder einen Verschmutzungsgrad von in das Wäschepflegegerät einzubringender Wäsche umfasst.

4. System (200) nach Anspruch 2 oder 3, **dadurch gekennzeichnet, dass** das generierte Steuerungsprogramm zumindest einen Steuerungsparameter für das Wäschepflegegerät umfasst, wobei der Steuerungsparameter insbesondere die Dauer des Wäschepflegeprogramms, die Anzahl und Dauer von verschiedenen Schritten des Wäschepflegeprogramms, die Temperatur von Waschflüssigkeit während des Wäschepflegeprogramms oder von verschiedenen Schritten des Wäschepflegeprogramms, die Menge von zugeführter Wäschepflegesubstanz, und/oder die Menge von zugeführter Waschflüssigkeit umfasst.

5. System (200) nach einem der vorangehenden Ansprüche, **dadurch gekennzeichnet, dass** die Eingabevorrichtung (201) ein Mobilgerät, insbesondere Laptop oder Tablet oder Smartphone, des Nutzers umfasst, wobei der Nutzer den Eingabeparameter manuell in das Mobilgerät eingeben kann, oder wobei das Mobilgerät eine optische Erfassungseinrichtung, insbesondere Kamera umfasst, welche ausgebildet ist, den Eingabeparameter automatisch zu erfassen.

6. System (200) nach einem der vorangehenden Ansprüche, **dadurch gekennzeichnet, dass** die Eingabevorrichtung (201) direkt mit dem Haushaltsgerät (100) verbunden ist und eine optische Erfassungseinrichtung, insbesondere Kamera umfasst, welche ausgebildet ist, den Eingabeparameter automatisch zu erfassen.

7. System (200) nach einem der vorangehenden Ansprüche, **dadurch gekennzeichnet, dass** das Haushaltsgerät (100) und/oder die Eingabevorrichtung (201) ein Anzeigeelement, insbesondere einen Bildschirm, aufweist, welches ausgebildet ist, die in die Eingabevorrichtung (201) eingegebenen Eingabeparameter darzustellen, und/oder welches ausgebildet ist, Steuerungsparameter des durch die Modulsteuerung (219) generierten Steuerungsprogramms darzustellen.

8. System (200) nach einem der vorangehenden Ansprüche, **dadurch gekennzeichnet, dass** die Modulsteuerung (219) ausgebildet ist, in einem ersten Programmierungsschritt ein Vorsteuerungsprogramm für das Haushaltsgerät (100) basierend auf dem übertragenen zumindest einen Eingabeparameter zu programmieren, und wobei die Modulsteuerung (219) ausgebildet ist, in einem sich an dem ersten Programmierungsschritt anschließenden zweiten Programmierungsschritt, das Vorsteuerungsprogramm basierend auf zumindest einem weiteren Eingabeparameter zu aktualisieren, um das Steuerungsprogramm für das Wäschepflegegerät zu programmieren, wobei die weiteren Eingabeparameter insbesondere einen Gerätetyp des Haushaltsgeräts (100) umfasst.

9. System (200) nach einem der vorangehenden Ansprüche, **dadurch gekennzeichnet, dass** die Modulsteuerung (219) eingerichtet ist, einen selbstlernenden Algorithmus, insbesondere einen auf künstlicher Intelligenz basierenden selbstlernenden Algorithmus, auszuführen, um das Steuerungsprogramm zu programmieren.

10. System (200) nach einem der vorangehenden Ansprüche, **dadurch gekennzeichnet, dass** die erste Netzwerkverbindung (203) einen der Eingabevorrichtung (201) zugeordneten Eingabesender (209), welcher ausgebildet ist, den zumindest einen Eingabeparameter an das Steuerungsmodul (205) zu übertragen, und einen dem Steuerungsmodul (205) zugeordneten Eingabeempfänger (211), welcher ausgebildet ist, den Eingabeparameter zu empfangen, aufweist, und/oder wobei die zweite Netzwerkverbindung (207) einen dem Steuerungsmodul (205) zugeordneten Modulsender (213), welcher ausgebildet ist, das programmierte Steuerungsprogramm an das Haushaltsgerät (100) zu übertragen, und einen dem Haushaltsgerät (100) zugeordneten Geräteempfänger (103), welcher ausgebildet ist, das programmierte Steuerungsprogramm zu empfangen, aufweist.

11. System (200) nach einem der vorangehenden Ansprüche 2 bis 10, **dadurch gekennzeichnet, dass** das Wäschepflegegerät ein Trommel-freies Wäschepflegegerät ist.

12. Verfahren (300) zum Steuern eines Systems (200) mit einem Haushaltsgerät (100), wobei das System (200) das Haushaltsgerät (100) mit einer Gerätesteuerung (101), ein Steuerungsmodul (205) mit einer Modulsteuerung (219) und eine durch einen Nutzer des Systems (200) bedienbare Eingabevorrichtung (201) umfasst, wobei das Steuerungsmodul (205) durch eine erste Netzwerkverbindung (203) mit der Eingabevorrichtung (201) steuerungstechnisch verbunden ist, und wobei das Steuerungsmodul (205) mit dem Haushaltsgerät (100) durch eine zweite Netzwerkverbindung (207) steuerungstechnisch verbunden ist, wobei die Modulsteuerung (219) einen Datenspeicher aufweist, auf welchem eine Mehrzahl von Programmblöcken zum Steuern des Haushaltsgeräts (100) hinterlegt ist, wobei jedem Programmblock zumindest ein veränderbarer Steuerungsparameter zugeordnet ist, wobei die Modulsteuerung (219) ausgebildet ist, basierend auf dem zumindest einen übertragenen Eingabeparameter Programmblöcke aus der Mehrzahl von Programmblöcken auszuwählen und basierend auf dem zumindest einen übertragenen Eingabeparameter die jeweiligen veränderbaren Steuerungsparameter jeweils auf einen Wert festzulegen, um das Steuerungsprogramm zu programmieren, wobei das Verfahren die folgenden Verfahrensschritte umfasst,
Übertragen (301) zumindest eines auf der Eingabe des Nutzers des Systems (200) basierenden Eingabeparameters von der Eingabevorrichtung (201) durch die erste Netzwerkverbindung (203) an das Steuerungsmodul (205), **gekennzeichnet durch**
Programmieren (303) eines Steuerungsprogramms für das Haushaltsgeräts (100) basierend auf dem übertragenen zumindest einen Eingabeparameter durch die Modulsteuerung (219), indem
durch die Modulsteuerung (219) Programmblöcke aus der Mehrzahl von Programmblöcken basierend auf dem zumindest einen übertragenen Eingabeparameter ausgewählt und basierend auf dem zumindest einen übertragenen Eingabeparameter die jeweiligen veränderbaren Steuerungsparameter jeweils auf einen Wert festgelegt werden, um das Steuerungsprogramm zu programmieren,
Übertragen (205) des programmierten Steuerungsprogramms für das Haushaltsgerät (100) von dem Steuerungsmodul (205) durch die zweite Netzwerkverbindung (207) an das Haushaltsgerät (100), und
Aktivieren (207) des programmierten Steuerungsprogramms durch die Gerätesteuerung (101) des Haushaltsgeräts (100), um das programmierte Steuerungsprogramm auf dem Haushaltsgerät (100) basierend auf der Eingabe des Nutzers des Systems (200) auszuführen.

13. Verfahren (300) nach Anspruch 12, **dadurch gekennzeichnet, dass** das Haushaltsgerät (100) ein Wäschepflegegerät mit einer Gerätesteuerung (101), das Steuerungsmodul (205) mit der Modulsteuerung (219) und die durch einen Nutzer des Systems (200) bedienbare Eingabevorrichtung (201) umfasst, wobei das Steuerungsmodul (205) durch die erste Netzwerkverbindung (203) mit der Eingabevorrichtung (201) steuerungstechnisch verbunden ist, und wobei das Steuerungsmodul (205) mit dem Wäschepflegegerät durch die zweite Netzwerkverbindung (207) steuerungstechnisch verbunden ist, **dadurch gekennzeichnet, dass** Verfahren die folgenden Verfahrensschritte umfasst,
Übertragen (301) zumindest eines auf der Eingabe des Nutzers des Systems (200) basierenden Eingabeparameters von der Eingabevorrichtung (201) durch die erste Netzwerkverbindung (203) an das Steuerungsmodul (205),
Programmieren (303) eines Steuerungsprogramms für das Wäschepflegegerät basierend auf dem übertragenen zumindest einen Eingabeparameter durch die Modulsteuerung (219),
Übertragen (305) des programmierten Steuerungsprogramms für das Wäschepflegegerät von dem Steuerungsmodul (205) durch die zweite Netzwerkverbindung (207) an das Wäschepflegegerät, und
Aktivieren (307) des programmierten Steuerungsprogramms durch die Gerätesteuerung (101) des Wäschepflegegeräts, um das programmierte Steuerungsprogramm auf dem Wäschepflegegerät basierend auf der Eingabe des Nutzers des Systems (200) auszuführen.

14. Computerprogramm zum Ablaufen auf dem Steuerungsmodul (205) des Systems (200) nach einem der Ansprüche 1 bis 11, wobei das Computerprogramm ausgebildet ist, den folgenden Verfahrensschritt auszuführen: Programmieren (303) eines Steuerungsprogramms für das Haushaltsgerät (100) basierend auf dem übertragenen zumindest einen Eingabeparameter durch die Modulsteuerung (219), oder Programmieren (303) eines Steuerungsprogramms für das Wäschepflegegerät basierend auf dem übertragenen zumindest einen Eingabeparameter durch die Modulsteuerung (219).

## Claims

1. System (200) for controlling a household appliance (100), wherein the system (200) comprises the household appliance (100) with an appliance controller (101), a control module (205) with a module controller (219) and an input apparatus (201) which can be operated by a user of the system (200), wherein the control module (205) is connected via control technology to the input apparatus (201) by means of a first network connection (203), and wherein the control module (205) is connected via control technology to the household appliance (100) by means of a second network connection (207), wherein
the input apparatus (201) is embodied to transmit at least one input parameter by means of the first network connection (203) to the control module (205) on the basis of the input of the user of the system (200), **characterised in that**
the module controller (219) of the control module (205) is embodied to program a control program for the household appliance (100) on the basis of the transmitted at least one input parameter,
wherein the control module (205) is embodied to transmit the programmed control program for the household appliance (100) by means of the second network connection (207) to the household appliance (100), and
wherein the appliance controller (101) of the household appliance (100) is embodied to activate the programmed control program for the household appliance (100) in order to execute the programmed control program on the household appliance (100) on the basis of the input of the user of the system (200),
wherein the module controller (219) has a data memory, on which a plurality of program blocks for controlling the household appliance (100) is stored, wherein at least one changeable control parameter is assigned to each program block, wherein the module controller (219) is embodied to select program blocks from the plurality of program blocks on the basis of the at least one transmitted input parameter and, on the basis of the at least one transmitted input parameter, to fix the respective changeable control parameter in each case to a value in order to program the control program.

2. System (200) according to claim 1, **characterised in that** household appliance (100) is a laundry care appliance for caring for laundry, wherein the system (200) comprises the laundry care appliance with an appliance controller (101), the control module (205) with the module controller (219) and the input apparatus (201) which can be operated by a user of the system (200), wherein the control module (205) is connected via control technology to the input apparatus (201) by means of the first network connection (203) and wherein the control module (205) is connected via control technology to the laundry care appliance by means of the second network connection (207), wherein
the input apparatus (201) is embodied to transmit at least one input parameter by means of the first network connection (203) to the control module (205) on the basis of the input of the user of the system (200),
wherein the module controller (219) of the control module (205) is embodied to program a control program for the laundry care appliance on the basis of the transmitted at least one input parameter,
wherein the control module (205) is embodied to transmit the programmed control program for the laundry care appliance by means of the second network connection (207) to the laundry care appliance, and
wherein the appliance controller (101) of the laundry care appliance is embodied to activate the programmed control program for the laundry care appliance in order to execute the programmed control program on the laundry care appliance on the basis of the input of the user of the system (200).

3. System (200) according to claim 2, **characterised in that** the at least one input parameter comprises a laundry parameter, in particular a loading weight, a loading volume, a type of laundry, a type of textile, a colour, an odour, and/or a degree of soiling of laundry to be introduced into the laundry care appliance.

4. System (200) according to claim 2 or 3, **characterised in that** the generated control program comprises at least one control parameter for the laundry care appliance, wherein the control parameter comprises in particular the duration of the laundry care program, the number and duration of different steps of the laundry care program, the temperature of washing liquid during the laundry care program or of different steps of the laundry care program, the quantity of supplied laundry care substance, and/or the quantity of supplied washing liquid.

5. System (200) according to one of the preceding claims,
**characterised in that** the input apparatus (201) comprises a mobile device, in particular laptop or tablet or smartphone, of the user, wherein the user can manually input the input parameter into the mobile device or wherein the mobile device comprises an optical detection facility, in particular camera, which is embodied to automatically detect the input parameter.

6. System (200) according to one of the preceding claims, **characterised in that** the input apparatus (201) is connected directly to the household appliance (100) and comprises an optical detection facility, in particular camera, which is embodied to automatically detect the input parameter.

7. System (200) according to one of the preceding claims, **characterised in that** the household appliance (100) and/or the input apparatus (201) has a display element, in particular a monitor, which is embodied to display the input parameter input into the input apparatus (201) and/or which is embodied to display control parameters of the control program generated by the module controller (219).

8. System (200) according to one of the preceding claims, **characterised in that** the module controller (219) is embodied, in a first programming step, to program a pilot control program for the household appliance (100) based on the transmitted at least one input parameter, and wherein the module controller (219) is embodied, in a second programming step following the first programming step, to update the pilot control program on the basis of the at least one further input parameter in order to program the control program for the laundry care appliance, wherein the further input parameter comprises in particular an appliance type of the household appliance (100).

9. System (200) according to one of the preceding claims, **characterised in that** the module controller (219) is designed to execute a self-learning algorithm, in particular a self-learning algorithm based on artificial intelligence, in order to program the control program.

10. System (200) according to one of the preceding claims, **characterised in that** the first network connection (203) has an input transmitter (209) assigned to the input apparatus (201), which input transmitter (209) is embodied to transmit the at least one input parameter to the control module (205), and an input receiver (211) assigned to the control module (205), which input receiver (211) is embodied to receive the input parameter, and/or wherein the second network connection (207) has a module transmitter (213) assigned to the control module (205), which module transmitter (213) is embodied to transmit the programmed control program to the household appliance (100) and an appliance receiver (103) assigned to the household appliance (100) which appliance receiver (103) is embodied to receive the programmed control program.

11. System (200) according to one of the preceding claims 2 to 10, **characterised in that** the laundry care appliance is a drum-free laundry care appliance.

12. Method (300) for controlling a system (200) with a household appliance (100), wherein the system (200) comprises the household appliance (100) with an appliance controller (101), a control module (205) with a module controller (219) and an input apparatus (201) which can be controlled by a user of the system (200), wherein the control module (205) is connected via control technology to the input apparatus (201) by means of a first network connection (203), and wherein the control module (205) is connected via control technology to the household appliance (100) by means of a second network connection (207), wherein the module controller (219) has a data memory, on which a plurality of program blocks is stored for controlling the household appliance (100), wherein at least one changeable control parameter is assigned to each program block, wherein the module controller (219) is embodied to select program blocks from the plurality of program blocks on the basis of the at least one transmitted input parameter and to fix the respective changeable control parameter to a value in each case on the basis of the at least one transmitted input parameter in order to program the control program, wherein the method comprises the following method steps,
transmitting (301) at least one input parameter based on the input of the user of the system (200) from the input apparatus (201) to the control module (205) by means of the first network connection (201), **characterised by**
programming (303) a control program for the household appliance (100) on the basis of the transmitted at least one input parameter by means of the module controller (219), by
the module controller (219) selecting program blocks from the plurality of program blocks on the basis of the at least one transmitted input parameter and on the basis of the at least one transmitted input parameter fixing the respective changeable control parameters to a value in each case in order to program the control program,
transmitting (205) the programmed control program for the household appliance (100) from the control module (205) by means of the second network connection (207) to the household appliance (100), and
activating (207) the programmed control program by means of the appliance controller (101) of the household appliance (100) in order to execute the programmed control program on the household appliance (100) based on the input of the user of the system (200).

13. Method (300) according to claim 12, **characterised in that** the household appliance (100) comprises a laundry care appliance with an appliance controller (101), the control module (205) with the module controller (219) and the input apparatus (201) which can be operated by a user of the system (200), wherein the control module (205) is connected via control technology to the input apparatus (201) by means of the first network connection (203), and wherein the control module (205) is connected via control technology to the laundry care appliance by means of the second network connection (207), **characterised in that** method comprises the following method steps,
transmitting (301) at least one input parameter based on the input of the user of the system (200) from the input apparatus (201) through the first network connection (203) to the control module (205),
programming (303) a control program for the laundry care appliance based on the transmitted at least one input parameter by means of the module controller (219),
transmitting (305) the programmed control program for the laundry care appliance from the control module (205) through the second network connection (207) to the laundry care appliance, and
activating (307) the programmed control program by the appliance controller (101) of the laundry care appliance in order to execute the programmed control program on the laundry care appliance based on the input of the user of the system (200).

14. Computer program to be run on the control module (205) of the system (200) according to one of claims 1 to 11, wherein the computer program is embodied to execute the following method step:
programming (303) a control program for the household appliance (100) on the basis of the transmitted at least one input parameter by means of the module controller (219), or programming (303) a control program for the laundry care appliance based on the transmitted at least one input parameter by means of the module controller (219).

## Revendications

1. Système (200) de commande d'un appareil électroménager (100), le système (200) comprenant l'appareil électroménager (100) avec une commande d'appareil (101), un module de commande (205) avec une commande de module (219) ainsi qu'un dispositif de saisie (201) utilisable par un utilisateur du système (200), dans lequel le module de commande (205) est relié, du point de vue du contrôle, au dispositif de saisie (201) via une première connexion réseau (203), et dans lequel le module de commande (205) est relié à l'appareil électroménager (100) via une deuxième connexion réseau (207), dans lequel
le dispositif de saisie (201) est conçu pour transmettre, sur la base de l'entrée de l'utilisateur du système (200), au moins un paramètre d'entrée au module de commande (205) via la première connexion réseau (203), **caractérisé en ce que**
la commande de module (219) du module de commande (205) est conçue pour programmer un programme de commande destiné à l'appareil électroménager (100) sur la base de l'au moins un paramètre d'entrée transmis,
dans lequel le module de commande (205) est conçu pour transmettre à l'appareil électroménager (100) le programme de commande programmé pour l'appareil électroménager (100) via la deuxième connexion réseau (207), et
dans lequel la commande d'appareil (101) de l'appareil électroménager (100) est conçue pour activer le programme de commande programmé pour l'appareil électroménager (100) afin d'exécuter le programme de commande programmé sur l'appareil électroménager (100) sur la base de l'entrée de l'utilisateur du système (200),
dans lequel la commande de module (219) comprend une mémoire de données dans laquelle est enregistrée une pluralité de blocs de programme destinés au contrôle de l'appareil électroménager (100), dans laquelle chaque bloc de programme est associé à au moins un paramètre de commande modifiable, dans lequel la commande de module (219) est conçue pour sélectionner, sur la base de l'au moins un paramètre d'entrée transmis, des blocs de programme parmi cette pluralité de blocs de programme et pour définir, sur la base de l'au moins un paramètre d'entrée transmis, les paramètres de commande modifiables respectifs sur une valeur afin de programmer le programme de commande.

2. Système (200) selon la revendication 1, **caractérisé en ce que** l'appareil électroménager (100) est un appareil de soin du linge destiné à l'entretien du linge, le système (200) comprenant l'appareil de soin du linge avec une commande d'appareil (101), le module de commande (205) avec la commande de module (219) ainsi qu'un dispositif de saisie (201) utilisable par un utilisateur du système (200), dans lequel le module de commande (205) est relié du point de vue du contrôle au dispositif de saisie (201) via la première connexion réseau (203), et dans lequel le module de commande (205) est relié du point de vue du contrôle à l'appareil de soin du linge via une deuxième connexion réseau (207),
dans lequel le dispositif de saisie (201) est conçu pour transmettre, sur la base de l'entrée de l'utilisateur du système (200), au moins un paramètre d'entrée au module de commande (205) via la première connexion réseau (203),
dans lequel la commande de module (219) du module de commande (205) est conçue pour programmer un programme de commande pour l'appareil de soin du linge sur la base de l'au moins un paramètre d'entrée transmis,
dans lequel le module de commande (205) est conçu pour transmettre à l'appareil de soin du linge le programme de commande programmé pour l'appareil de soin du linge via la deuxième connexion réseau (207), et
dans lequel la commande de l'appareil (101) de l'appareil de soin du linge est conçue pour activer le programme de commande programmé pour l'appareil de soin du linge afin d'exécuter le programme de commande programmé sur l'appareil de soin du linge sur la base de l'entrée de l'utilisateur du système (200).

3. Système (200) selon la revendication 2, **caractérisé en ce que** l'au moins un paramètre d'entrée comprend un paramètre de linge, en particulier un poids de charge, un volume de charge, un type de linge, une nature de textile, une couleur, une odeur et/ou un degré de salissure du linge à introduire dans l'appareil de soin du linge.

4. Système (200) selon la revendication 2 ou 3, **caractérisé en ce que** le programme de commande généré comprend au moins un paramètre de commande pour l'appareil de soin du linge, dans lequel le paramètre de commande comprend notamment la durée du programme de soin du linge, le nombre et la durée de différentes étapes du programme de soin du linge, la température du liquide de lavage pendant le programme de soin du linge ou de différentes étapes du programme de soin du linge, la quantité de produit de soin du linge introduit et/ou la quantité de liquide de lavage introduite.

5. Système (200) selon l'une des revendications précédentes, **caractérisé en ce que** le dispositif de saisie (201) comprend un appareil mobile, en particulier un ordinateur portable, une tablette ou un smartphone de l'utilisateur, dans lequel l'utilisateur peut saisir manuellement le paramètre d'entrée dans l'appareil mobile, ou **en ce que** l'appareil mobile comprend un dispositif de capture optique, en particulier une caméra, conçu pour détecter automatiquement le paramètre d'entrée.

6. Système (200) selon l'une des revendications précédentes, **caractérisé en ce que** le dispositif de saisie (201) est directement relié à l'appareil électroménager (100) et comprend un dispositif de capture optique, en particulier une caméra, conçu pour détecter automatiquement le paramètre d'entrée.

7. Système (200) selon l'une des revendications précédentes, **caractérisé en ce que** l'appareil électroménager (100) et/ou le dispositif de saisie (201) comprend un élément d'affichage, en particulier un écran, conçu pour représenter les paramètres d'entrée saisis dans le dispositif de saisie (201), et/ou conçu pour représenter des paramètres de commande du programme de commande généré par la commande de module (219).

8. Système (200) selon l'une des revendications précédentes, **caractérisé en ce que** la commande de module (219) est conçue pour programmer, dans une première étape de programmation, un programme de pré-commande pour l'appareil électroménager (100) sur la base de l'au moins un paramètre d'entrée transmis, et **en ce que** la commande de module (219) est conçue, dans une deuxième étape de programmation faisant suite à la première étape de programmation, pour mettre à jour le programme de pré-commande sur la base d'au moins un paramètre d'entrée supplémentaire afin de programmer le programme de commande pour l'appareil de soin du linge, dans lequel les paramètres d'entrée supplémentaires comprennent notamment un type d'appareil de l'appareil électroménager (100).

9. Système (200) selon l'une des revendications précédentes, **caractérisé en ce que** la commande de module (219) est configurée pour exécuter un algorithme auto-apprenant, en particulier un algorithme auto-apprenant basé sur l'intelligence artificielle, afin de programmer le programme de commande.

10. Système (200) selon l'une des revendications précédentes, **caractérisé en ce que** la première connexion réseau (203) comprend un émetteur d'entrée (209) associé au dispositif de saisie (201), conçu pour transmettre l'au moins un paramètre d'entrée au module de commande (205), et un récepteur d'entrée (211) associé au module de commande (205), conçu pour recevoir le paramètre d'entrée, et/ou **en ce que** la deuxième connexion réseau (207) comprend un émetteur de module (213) associé au module de commande (205), conçu pour transmettre à l'appareil électroménager (100) le programme de commande programmé, et un récepteur d'appareil (103) associé à l'appareil électroménager (100), conçu pour recevoir le programme de commande programmé.

11. Système (200) selon l'une des revendications précédentes 2 à 10, **caractérisé en ce que** l'appareil de soin du linge est un appareil de soin du linge sans tambour.

12. Procédé (300) de commande d'un système (200) comprenant un appareil électroménager (100), dans lequel le système (200) comprend l'appareil électroménager (100) avec une commande d'appareil (101), un module de commande (205) avec une commande de module (219) ainsi qu'un dispositif de saisie (201) utilisable par un utilisateur du système (200), dans lequel le module de commande (205) est relié du point de vue du contrôle au dispositif de saisie (201) via une première connexion réseau (203), et dans lequel le module de commande (205) est relié du point de vue du contrôle à l'appareil électroménager (100) via une deuxième connexion réseau (207), dans lequel la commande de module (219) comprend une mémoire de données dans laquelle est enregistrée une pluralité de blocs de programme destinés au contrôle de l'appareil électroménager (100), dans lequel à chaque bloc de programme est associé au moins un paramètre de commande modifiable, dans lequel la commande de module (219) est conçue pour sélectionner, sur la base de l'au moins un paramètre d'entrée transmis, des blocs de programme parmi la pluralité de blocs de programme et pour définir, sur la base de l'au moins un paramètre d'entrée transmis, les paramètres de commande modifiables respectifs sur une valeur afin de programmer le programme de commande, dans lequel le procédé comprend les étapes suivantes :
transmission (301) d'au moins un paramètre d'entrée basé sur l'entrée de l'utilisateur du système (200) du dispositif de saisie (201) vers le module de commande (205) via la première connexion réseau (203), **caractérisé par**,
la programmation (303) d'un programme de commande pour l'appareil électroménager (100) sur la base de l'au moins un paramètre d'entrée transmis par la commande de module (219), dans lequel
par la commande de module (219), des blocs de programme sont sélectionnés parmi une pluralité de blocs de programme en fonction de l'au moins un paramètre d'entrée transmis, et en fonction de l'au moins un paramètre d'entrée transmis, les paramètres de commande modifiables respectifs sont définis chacun sur une valeur afin de programmer le programme de commande,
transmission (205) du programme de commande programmé pour l'appareil électroménager (100) depuis le module de commande (205) vers l'appareil électroménager (100) via la deuxième connexion réseau (207), et
activation (207) du programme de commande programmé par la commande d'appareil (101) de l'appareil électroménager (100), afin d'exécuter le programme de commande sur l'appareil électroménager (100) sur la base de l'entrée de l'utilisateur du système (200).

13. Procédé (300) selon la revendication 12, **caractérisé en ce que** l'appareil électroménager (100) est un appareil de soin du linge avec une commande d'appareil (101), le module de commande (205) avec la commande de module (219) et le dispositif de saisie (201) utilisable par un utilisateur du système (200), dans lequel le module de commande (205) est relié du point de vue du contrôle au dispositif de saisie (201) via la première connexion réseau (203), et dans lequel le module de commande (205) est relié du point de vue du contrôle à l'appareil de soin du linge via la deuxième connexion réseau (207),
**caractérisé en ce que** le procédé comprend les étapes suivantes :
transmission (301) d'au moins un paramètre d'entrée basé sur l'entrée de l'utilisateur du système (200) du dispositif de saisie (201) vers le module de commande (205) via la première connexion réseau (203),
programmation (303) d'un programme de commande pour l'appareil de soin du linge par la commande de module (219), sur la base de l'au moins un paramètre d'entrée transmis,
transmission (305) du programme de commande programmé pour l'appareil de soin du linge depuis le module de commande (205) vers l'appareil de soin du linge via la deuxième connexion réseau (207), et
activation (307) du programme de commande programmé par la commande d'appareil (101) de l'appareil de soin du linge, afin d'exécuter le programme de commande programmé sur l'appareil de soin du linge sur la base de l'entrée de l'utilisateur du système (200).

14. Programme informatique destiné à être exécuté sur le module de commande (205) du système (200) selon l'une des revendications 1 à 11, dans lequel le programme informatique est conçu pour exécuter l'étape de procédé suivante :
programmation (303) d'un programme de commande pour l'appareil électroménager (100) par la commande de module (219) sur la base de l'au moins un paramètre d'entrée transmis, ou
programmation (303) d'un programme de commande pour l'appareil de soin du linge par la commande de module (219) sur la base de l'au moins un paramètre d'entrée transmis.
